(19) Europäisches Patentamt / European Patent Office / Office européen des brevets

(11) **EP 2 877 824 B1**

(12) **FASCICULE DE BREVET EUROPEEN**

(45) Date de publication et mention
de la délivrance du brevet:
**18.09.2019 Bulletin 2019/38**

(51) Int Cl.:
***G01K 17/00*** *(2006.01)* ***G01K 19/00*** *(2006.01)*

(21) Numéro de dépôt: **13739711.3**

(86) Numéro de dépôt international:
**PCT/EP2013/065471**

(22) Date de dépôt: **23.07.2013**

(87) Numéro de publication internationale:
**WO 2014/016273 (30.01.2014 Gazette 2014/05)**

(54) **CALORIMETRE AUTO-ETALONNABLE PAR SUBSTITUTION ELECTRIQUE**

SELBSTKALIBRIERENDER KALORIMETER MITHILFE VON ELEKTRISCHER SUBSTITUTION

SELF-CALIBRATING CALORIMETER USING ELECTRICAL SUBSTITUTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2012 FR 1257166**

(43) Date de publication de la demande:
**03.06.2015 Bulletin 2015/23**

(73) Titulaires:
• **Commissariat à l'Énergie Atomique et aux Énergies Alternatives**
**75015 Paris (FR)**
• **Laser Metrologie**
**74960 Cran-gevrier (FR)**
Etats contractants désignés:
**FR**

(72) Inventeurs:
• **VILLATE, Denis**
**F-33750 Baron (FR)**
• **SOSCIA, Marco**
**F-74330 Poisy (FR)**

(74) Mandataire: **Brevalex**
**95, rue d'Amsterdam**
**75378 Paris Cedex 8 (FR)**

(56) Documents cités:
**US-A1- 2002 163 333 US-A1- 2005 018 178**
**US-A1- 2008 164 429**

• **SOSCIA M: "Calorimétrie laser: mesure de forte puissances laser", BULLETIN DU BNM, no. 82, octobre 1990 (1990-10), pages 9-15, XP002696647,**
• **UCHIYAMA F ET AL: "A 10 kW class calorimeter for CW-CO2 laser power measurements", CPEM '88 DIGEST. 1988 CONFERENCE ON PRECISION ELECTROMAGNETIC MEASUREMENTS SOC. INSTRUM. & CONTROL ENG. TOKYO, JAPAN, 1988, pages 399-400, XP002696648,**

EP 2 877 824 B1

## EP 2 877 824 B1

**Description**

**DOMAINE TECHNIQUE**

L'invention se situe dans le domaine de la mesure de puissances et concerne plus spécifiquement un dispositif de calibrage du calorimètre selon l'invention comportant un élément résistif chauffant, une source d'eau de refroidissement, une source de tension à régulation série destinée à fournir une puissance électrique à l'élément chauffant, au moins un voltmètre destiné à mesurer la tension aux bornes de ladite source, un premier thermomètre et un deuxième thermomètre destinés à mesurer la température de l'eau de refroidissement respectivement à l'entrée et à la sortie dudit calorimètre, un fréquencemètre destiné à mesurer le débit d'eau de refroidissement.
L'invention concerne également un procédé de calibrage d'un tel calorimètre.

**ÉTAT DE LA TECHNIQUE ANTÉRIEURE**

Les calorimètres de l'art antérieur utilisés pour mesurer des puissances, notamment laser, sont généralement munis de plusieurs appareils de mesure dédiés chacun à une grandeur physique particulière, telle que par exemple la tension d'alimentation ou la température du calorimètre ou encore le débit d'eau de refroidissement dudit calorimètre.

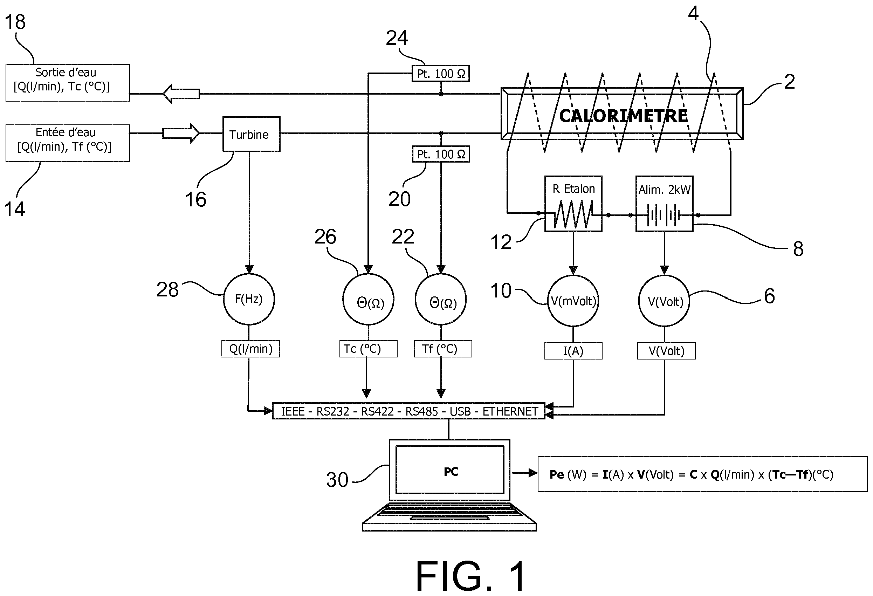

La figure 1 illustre schématiquement une chaîne d'acquisition utilisée dans un calorimètre 2 auto étalonnable de l'art antérieur comportant un élément chauffant résistif 4 bobiné autour du calorimètre 2, un premier voltmètre 6 destiné à mesurer la tension d'alimentation délivrée par une source 8 à l'élément résistif 4, un deuxième voltmètre 10 destiné à mesurer la tension au bornes d'une résistance shunt étalon 12 faiblement résistive placé en série dans le circuit d'alimentation de l'élément chauffant 4 et destiné à mesurer le courant d'alimentation traversant cet élément résistif 4. Le calorimètre de la figure 1 comporte en outre une arrivée d'eau 14 reliée à une turbine 16 destinée à fournir l'eau de refroidissement du calorimètre 2, et une sortie 18 destinée à évacuer l'eau de refroidissement après passage dans le calorimètre 2. La turbine 16 est adaptée pour délivrer une fréquence proportionnelle au débit d'eau de refroidissement.
La variation de la température du calorimètre 2 est mesurée par une première sonde à résistance platine 20 reliée à un premier thermomètre 22 et une deuxième sonde à résistance platine 24 reliée à un deuxième thermomètre 26.
Pour calibrer ce calorimètre on simule la puissance laser qu'on souhaite mesurer en dissipant par effet joule une puissance électrique correspondante bien connue dans l'élément chauffant résistif 4 de façon à reproduire au mieux les effets thermiques résultant de l'absorption optique du faisceau. Le principe de fonctionnement est décrit ci-dessous.
Pour une puissance électrique dissipée dans l'élément résistif 4, on mesure l'élévation de température Tc(°C) - Tf(°C) de l'eau à la sortie du calorimètre pour un débit de refroidissement Q (l/min). Les résultats obtenus montrent que la puissance électrique dissipée Pe est proportionnelle, aux pertes thermiques près, au produit de l'élévation de température par le débit Q: Pe = C x (Tc - Tf) x Q, le coefficient de proportionnalité C représentant la valeur expérimentale de la capacité thermique volumique de l'eau dont la valeur théorique à 20°C est égale à 0,0695 kw/[°C x(l/min)].
La puissance électrique est générée par une source alimentation 8 à régulation série redressée, filtrée et régulée, dont on peut mesurer la puissance fournie avec précision à l'aide de la relation simple Pe(W) = V(Volt) x I(Ampère), où V est la tension en volts mesurée directement aux bornes de la source d'alimentation 8 à l'aide du voltmètre 6, I est le courant en ampères mesuré par l'intermédiaire du shunt étalon 12. La chute de tension aux bornes du shunt étalon 12 est mesurée à l'aide du voltmètre 10. Le débit d'eau refroidissant le calorimètre Q(l/min) est mesuré à l'aide de la turbine 16 qui génère un signal fréquence en Hz. Cette mesure est réalisée à l'aide d'un fréquencemètre 28.
Chacun des instruments utilisés pour réaliser les mesures décrites ci-dessus est relié à une unité de traitement 30 qui centralise et sauvegarde l'ensemble des données. Les interfaces utilisées peuvent être de type parallèle IEEE, série RS232, RS 422, RS 485, USB ou de type réseau Ethernet.
Un inconvénient de la chaîne d'acquisition de la figure 1 provient du fait que les mesures sont réalisées par cinq instruments de trois types différents nécessitant chacun un protocole spécifique de communication avec l'unité de traitement 30. Cette chaîne d'acquisition peut être simplifiée en utilisant des centrales d'acquisitions ou des voltmètres multiplexés utilisant un seul microprocesseur ou un seul microcontrôleur qui à l'aide d'un multiplexage reçoit des signaux qui sont de natures très différentes (température, fréquence et tension) ou même de niveaux très différents. En effet, on passe d'une tension à mesurer de plusieurs centaines de volt à une tension à mesurer de quelques dizaines de millivolts. Si la précision souhaitée pour les mesures est élevée, l'option qui utilise un multiplexage est peu compatible avec des mesures rapides à résolutions élevées et à faible bruit. Il est alors préférable de conserver cinq instruments distincts dédiés chacun à une seule grandeur à mesurer.
Les instruments utilisés dans la chaîne d'acquisition de la figure 1 pourraient également être remplacés par des cartes d'instrumentation dédiées, installées sur le bus PCI (pour Peripheral Component Interconnect) d'un ordinateur. Cette solution est également peu compatible avec des mesures à haute résolution et à faible bruit sur de signaux qui peuvent également être très différents (le bus PCI est alimenté par une alimentation à découpage peu compatible avec

2

des performances métrologiques élevées).

Le Document SOCIA M : « Calorimètrie laser : mesure de forte puissances laser », Bulletin du BNM, n°. 82, Octobre 190, pages 9-15, divulgue un « calorimètre laser, auto-étalonnable par substitution électrique dans lequel on dissipe, par effet joule, une puissance électrique bien connue au niveau des absorbeurs de façon à reproduire le mieux possible les effets thermiques résultant de l'absorption d'un faisceau incident.

Un but de l'invention est de pallier les inconvénients de l'art antérieur décrit ci-dessus.

## EXPOSÉ DE L'INVENTION

L'invention consiste à remplacer l'ensemble des instruments de mesure conventionnels utilisés dans une chaîne d'acquisition ou éventuellement plusieurs cartes d'acquisition et de traitement enfichées sur le bus PCI (Peripheral Component Interconnect) d'un ordinateur par une seule carte électronique d'acquisition qui embarque des solutions spécifiques et optimisées pour les différentes grandeurs à mesurer.

Le dispositif de calibrage du calorimètre selon l'invention comporte,

- des moyens pour mesurer une pluralité de grandeurs physiques de différentes natures et de différents niveaux, une unique carte d'acquisition comportant, pour chaque grandeur à mesurer, une chaîne d'acquisition autonome comprenant des circuits de traitement spécifiques à la grandeur mesurée, chaque chaîne d'acquisition autonome comportant un microcontrôleur dédié au traitement de la grandeur à mesurer
  un élément chauffant,
  une source de tension à régulation série destinée à fournir une puissance électrique à l'élément chauffant,
  une source d'eau de refroidissement,
  les moyens pour mesurer une pluralité de grandeurs physiques de différentes natures et de différents niveaux comportant :

  au moins un voltmètre destiné à mesurer la tension aux bornes de ladite source de tension,
  au moins un thermomètre destiné à mesurer la température de l'eau de refroidissement respectivement à l'entrée et à la sortie dudit calorimètre, ledit thermomètre comportant au moins deux résistances agencées respectivement à l'entrée et à la sortie dudit calorimètre à travers un pont de Wheatstone de manière à réaliser des mesures de température, et,
  un fréquencemètre destiné à mesurer le débit d'eau de refroidissement.

Le procédé de calibrage du calorimètre selon l'invention comporte les étapes suivantes :

- on simule la puissance d'un faisceau laser à mesurer au moyen dudit calorimètre en dissipant par effet joule une puissance électrique correspondant à ladite puissance laser sur un élément chauffant bobiné autour d'un absorbateur du calorimètre de façon à reproduire les effets thermiques résultant de l'absorption optique dudit faisceau laser, et,
- on mesure la différence de température entre la sortie et l'entrée d'eau du calorimètre à l'aide de deux sondes à résistance de platine placées respectivement à l'entrée et à la sortie du calorimètre à travers un pont de Wheatstone de manière à réaliser des mesures de température rapides à résolutions élevées et à faible bruit,
- on mesure la puissance électrique dissipée dans l'élément chauffant en fonction de la variation de la température d'une quantité donnée d'eau de refroidissement entre l'entrée et la sortie du calorimètre,
- on traite chaque grandeur physique mesurée dans une chaîne d'acquisition autonome au moyen de circuits de traitement spécifiquement dédiés à la grandeur mesurée et d'un microcontrôleur dédié au traitement de la grandeur à mesurer.

## BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :

- figure 1 illustre schématiquement une chaîne d'acquisition de l'art antérieur;
- la figure 2 illustre schématiquement une chaîne d'acquisition selon l'invention,
- la figure 3 représente un schéma électrique du dispositif de mesure de la température en entrée ou en sortie du calorimètre,
- la figure 4 représente un schéma d'un pont de Wheatstone pour mesurer la différence de température entre la sortie et l'entrée du calorimètre selon l'invention,
- la figure 5 représente un schéma électrique du dispositif de mesure de la différence de température à partir du pont de Wheatstone,

- la figure 6 est un schéma électrique d'un circuit de mesure du débit d'eau de refroidissement du calorimètre selon l'invention,
- les figures 7a à 7d représentent les schémas électriques des différentes sources d'alimentation utilisées par le calorimètre selon l'invention.

## EXPOSÉ DÉTAILLÉ DE MODES DE RÉALISATION PARTICULIERS

Dans la description qui va suivre, des références identiques désigneront les éléments communs aux différentes figures.

La figure 1 décrite précédemment illustre schématiquement une chaîne d'acquisition pour mesurer différentes grandeurs physiques lors de la simulation d'une puissance laser à mesurer par dissipation d'une puissance électrique équivalente dans un élément résistif.

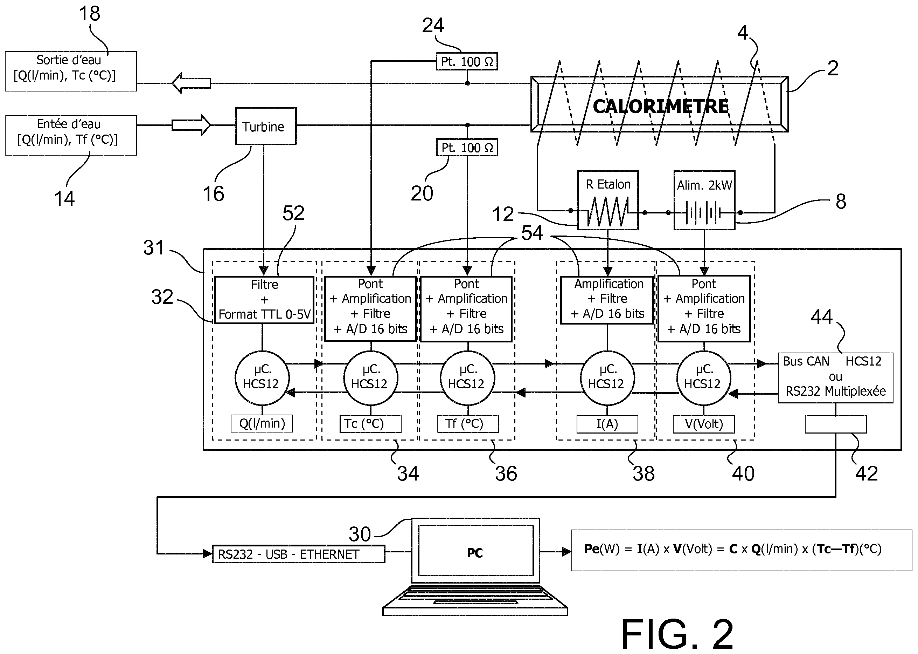

Sur la figure 2, tous les instruments de mesure utilisés dans la chaîne d'acquisition de la figure 1 sont embarqués sur une unique carte électronique 31 comportant cinq chaînes d'acquisition autonomes 32, 34, 36, 38, et 40 capables, chacune, de traiter, numériser et mesurer simultanément et en permanence une seule grandeur physique sans qu'elles ne soient perturbées par un multiplexage sur des lignes d'acquisition différentes pour des signaux différents. Seul le transfert des données numériques est multiplexé vers un microcontrôleur maître 42 par l'intermédiaire d'un bus série commun 44 de type CAN ou RS232. Ce multiplexage n'a aucun effet perturbateur sur les différents signaux analogiques. Seul le microcontrôleur maître 42 qui centralise les données numériques est interfacé à l'unité de traitement 30 qui réalise la sauvegarde et les traitements des données.

Chacune des chaînes d'acquisition autonomes 32 à 40 comporte un module de conditionnement du signal dédié à la grandeur physique mesurée et un microcontrôleur dédié au traitement des données relatives à cette grandeur physique.

Dans l'exemple de réalisation illustré par la figure 2, la première chaîne d'acquisition 32 comporte un module 52 de filtrage et de mise en forme du signal de fréquence délivré par la turbine 16, les chaînes d'acquisition 34 à 40 comportent chacune un module 54 comportant un pont d'amplification, un filtre et un convertisseur analogique/numérique 16 bits. En outre, chacune desdites chaînes d'acquisition 32 à 40 comporte un microcontrôleur 55 Freescale HCS12 16 bits/25MHz. D'autres microcontrôleurs peuvent bien évidemment être utilisés sans sortir du cadre de l'invention.

Le calibrage du calorimètre de la figure 2 est réalisé par les étapes suivantes:

- simuler la puissance d'un faisceau laser à mesurer en dissipant par effet joule une puissance électrique correspondant à ladite puissance laser sur l'élément chauffant 4 de façon à reproduire les effets thermiques résultant de l'absorption optique dudit faisceau laser,
- mesurer la puissance électrique dissipée dans l'élément chauffant 4 en fonction de la variation de la température d'une quantité donnée d'eau de refroidissement entre l'entrée 14 et la sortie 18 du calorimètre,
- traiter chaque grandeur physique mesurée de façon indépendante dans la chaîne d'acquisition autonome qui lui est dédiée au moyen des circuits de traitement spécifiquement dédiés à la grandeur mesurée.

Dans l'exemple de réalisation de la figure 2, les circuits de traitement spécifiques à chaque grandeur utilisent des composants passifs et actifs de haute précision, à très faible offset, très faible bruit et très faibles dérive thermique. Les amplificateurs opérationnels utilisés comme suiveur et composants de filtres actifs présentent une dérive de leurs offsets de 0,1μV/°C. Les amplificateurs de tension utilisés présentent une non linéarité de 0,005% sur leur gamme d'amplification et une dérive en température de 5 ppm/°C. Les références de tensions utilisées présentent une erreur de ± 0,02% et une dérive en température de 2 ppm/°C. Les résistances utilisées dans les ponts de mesure et pour les circuits de calibration présentent une erreur de ± 0,01% et une dérive en température de 2 ppm/°C. Les convertisseurs analogiques numériques 16 bits utilisés sont rapides et présentent une dérive en température de leur offset de 3 ppm/°C. Les solutions spécifiques qui utilisent ces composants sont dédiées et optimisées pour chacun des signaux à mesurer.

En fonctionnement, la température de l'eau à l'entrée du calorimètre $T_f$ est mesurée à l'aide une sonde à résistance de platine Pt100, la différence de température entre la sortie et l'entrée d'eau du calorimètre, $(T_c - T_f)$ est à mesurer à l'aide de deux sondes à résistance de platine placées respectivement à l'entrée et à la sortie du calorimètre, le débit d'eau Q refroidissant le calorimètre est mesuré à l'aide d'une turbine à hélice, le courant I et la tension V sont mesurés pour déterminer la puissance électrique dissipée par effet Joule dans le calorimètre et la température de l'eau à l'entrée du calorimètre est mesurée avec une résolution vraie de 0,001°C à l'aide de la sonde 20 à résistance de platine 100 ohms, Pt100, qui permet d'obtenir en association avec un thermomètre classique à caractère métrologique une résolution vraie de 0,01°C.

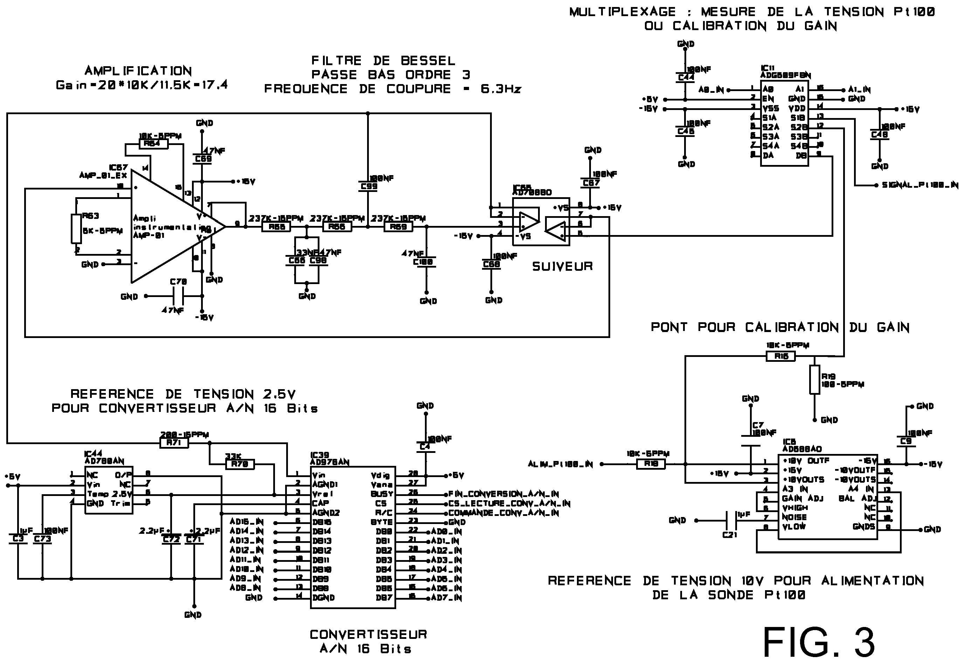

Compte tenu des objectifs à atteindre en termes de précision finale sur la mesure de la puissance (1%) soit l'équivalent en termes de résolution en température de 0,007°C, il convient d'augmenter la résolution de ces mesures, d'autant plus qu'au final la différence de température dégradera la résolution disponible de 0,01°C à quelques 0,01°C. La température est déduite de la valeur ohmique de la résistance de platine par la relation: R(T)=100x(1+3,9083x10-3xT-5,775x10-7xT$^2$). La valeur R(T) est déduite de la chute de tension aux bornes d'un pont diviseur de haute précision. La f.e.m. (force électromotrice) qui correspond à cette chute de tension est amplifiée et filtrée avant d'être numérisée à l'aide d'un CAN (convertisseur analogique-numérique) 10V/16 bits. Le schéma électronique correspondant est représenté à la figure 3.

Pour augmenter la résolution au-delà de 0.01°C, il convient de restreindre la gamme de mesure disponible et d'augmenter la sensibilité dans cette gamme restreinte jusqu'à atteindre 450 μV pour 0,001°C, soit trois fois la résolution du CAN utilisé (10V sur 16 bits = 150μV). On constate ainsi entre 10°C et 50°C, une vraie résolution de 0,001°C sur les mesures de température. D'autre part pour vérifier la stabilité de ces mesures dans le temps, des moyens de calibration du gain de l'amplificateur en tension à partir d'un pont diviseur équipé de résistances métalliques de haute précision (0,01%) sont embarqués sur la carte électronique 31. Le gain de l'amplificateur mesuré périodiquement présente une stabilité de l'ordre de 0,01 %.

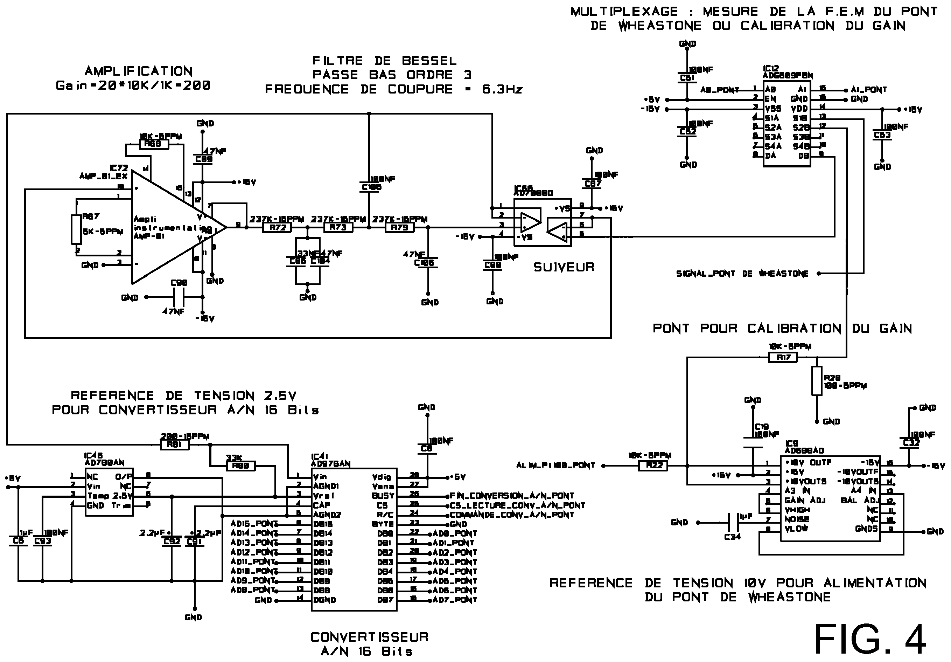

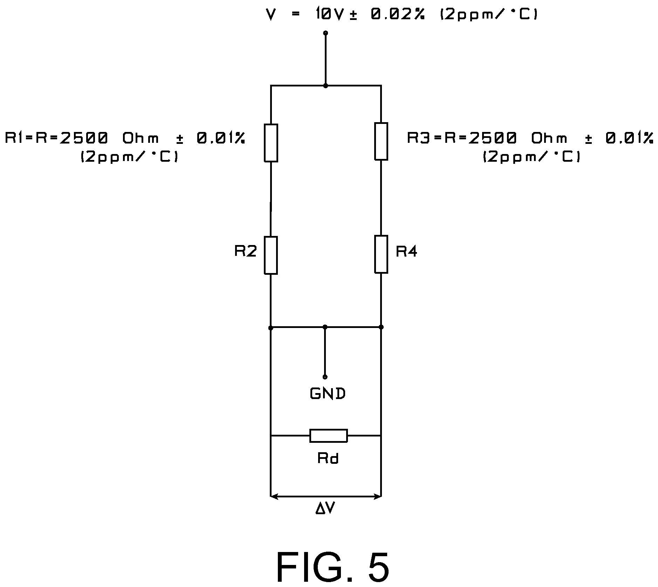

En utilisant le schéma électronique de la figure 3 respectivement sur la sonde Pt100 placée à la sortie d'eau 18, et sur la sonde Pt100 placée à l'entrée d'eau 14, pour mesurer l'élévation de température, on constate une dégradation de la résolution à quelques 0,001°C. Pour conserver une résolution de 0,001°C sur la différence de température deux résistances Pt100 sont placées respectivement à l'entrée ($R_f$) et à la sortie ($R_c$) du calorimètre à travers un pont de Wheatstone illustré par la figure 4. On réalise ainsi un macro capteur qui génère une f.e.m. La différence de température à mesurer s'exprime en fonction de cette f.e.m. à travers une relation qui fait également intervenir les autres paramètres du pont et en particulier la température $T_f$ à l'entrée du calorimètre 2 qui est mesurée séparément comme décrit au paragraphe précédent. La f.e.m. générée est amplifiée et filtrée avant d'être numérisée à l'aide d'un CAN 10V/16 bits, conformément au schéma de la figure 5.

Comme précédemment la sensibilité est fortement augmentée sur une plage de température restreinte: de 10°C à 50°C, et on obtient ainsi un bruit thermique inférieur à 0,001°C et une vraie résolution de 0,001°C sur la différence de température à mesurer. Au final on obtient d'une résolution équivalente en puissance mesurable égale à 0,25 W, soit 0,01% de la puissance électrique de calibration à 2 kW.

Si on considère RI = R3 = R = 2500 Ω (Résistances de réglage du courant),

$$R2 = R_c = R_f + \Delta R$$

(Résistance de la sonde à la sortie du calorimètre),
$R_4 = R_f$ (Résistance de la sonde à l'entrée du calorimètre), alors :

$$\frac{\Delta V}{R_d} = \left[ \frac{R_2 R_3 - R_1 R_4}{R_1 R_4 (R_2 + R_3) + R_2 R_3 (R_1 + R_4) + R_d (R_1 + R_2)(R_3 R_4)} \right] V_0$$

Si on considère que les résistances Ri sont négligeables devant l'impédance d'entrée du circuit de mesure Rd, l'équation (1) devient:

$$\frac{\Delta V}{R_d} = \frac{R_2 R_3 - R_1 R_4}{(R_1 + R_2)(R_3 R_4)} V_0$$

Les résistances $R_c$ et $R_f$ s'expriment en fonction de leur dépendance en température:

$$R_c = R_o[I + AT_c + BT_c^2] \text{ et } R_f = R_o[I + AT_F + BT_F^2]$$

avec: $R_0 = 100$ Ω, A = 3,9083 10$^{-3}$ °C$^{-1}$,
B= -5,775 10$^{-7}$ °C$^{-2}$

En combinant les équations précédentes, on obtient l'équation du second degré dont $\Delta T$ est la solution:

$$\Delta T^2 + \left(\frac{A}{B} + 2T_F\right)\Delta T - \frac{\Delta V}{R_0 B} \frac{(R + R_F)^2}{RV_0 - \Delta V(R + R_F)} = 0$$

Les mesures de débit sont réalisées à l'aide d'une turbine à hélice de très haute qualité qui délivre une fréquence proportionnelle au débit instantané. Ce type de turbine, fonctionne par induction magnétique. Un aimant permanent inséré dans l'hélice induit un signal électrique sinusoïdal dont la fréquence est proportionnelle à la fréquence de rotation de l'hélice. L'induction magnétique peut malheureusement être perturbée par des fluctuations et harmoniques à travers le réseau électrique public. Aussi pour s'affranchir de ces perturbations, le signal induit est encadré par deux filtres linéaires actifs de type BESSEL respectivement passe haut d'ordre 4 et passe bas d'ordre 4.

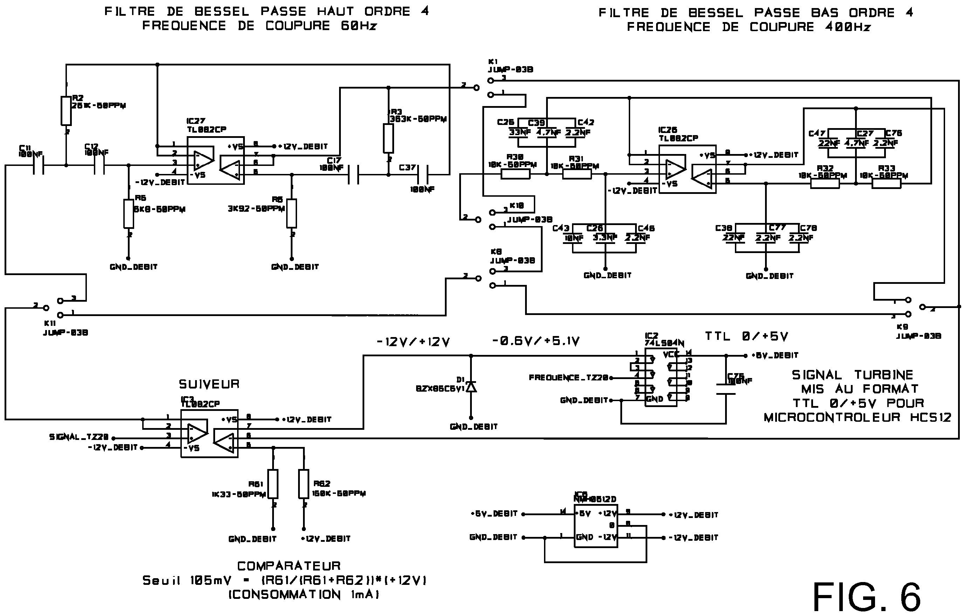

La figure 6 représente le schéma électrique d'un tel filtre. La résolution vraie obtenue ainsi sur le débit est égale à 0,001 litre/minute.

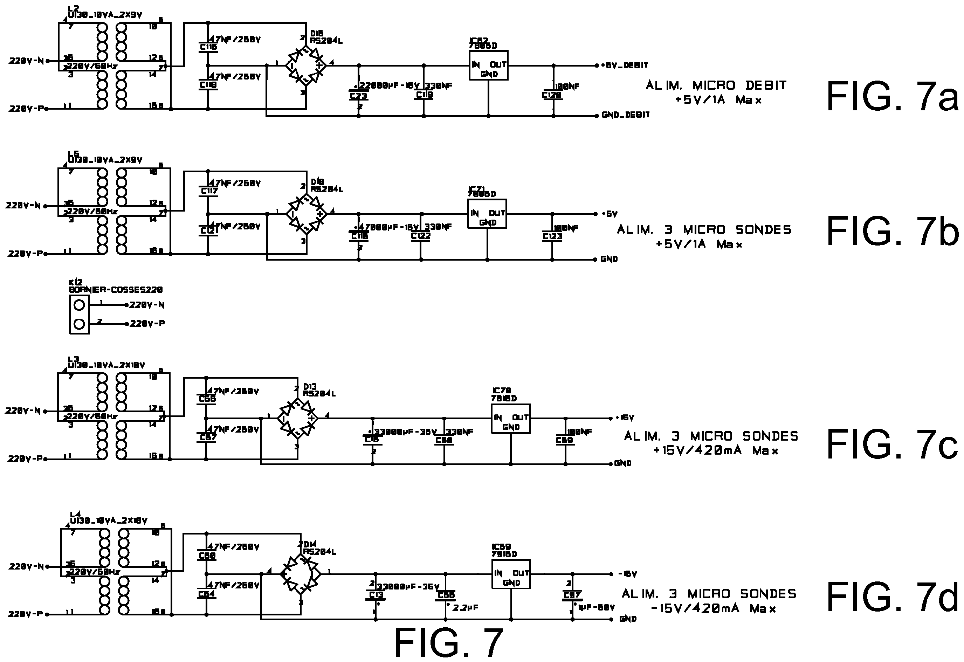

Les figures 7a à 7d représentent les schémas électriques des alimentations des fonctions électroniques précédemment décrites. Celles-ci sont de type linéaire redressées, fortement filtrées et régulées. Elles offrent de faibles ondulations résiduelles de quelques millivolts sur ± 15 V et comportent deux masses analogiques différentes et découplées; GND et GND_DEBIT, qui permettent d'isoler galvaniquement les bas signaux continus de même nature (les températures) du signal fréquence sinusoïdal délivré par la turbine 16.

Pour accéder à la puissance électrique dissipée par effet Joule il faut mesurer la tension et le courant correspondant. A cet effet, on utilise des shunts ou résistances étalon à très faible incertitude (0.01%) et de très faible dépendance en température (qqs ppm/°C). Ces shunts et résistances peuvent être directement embarqués sur la carte électronique 31, ce qui peut constituer un avantage certain en termes d'intégration.

Grâce au dispositif de l'invention, on remplace les instruments de mesures autonomes, voltmètres, fréquencemètre et thermomètres par une seule carte embarquée 31 qui comporte autant de voies de traitements autonomes que de grandeurs physiques à mesurer. On obtient ainsi une solution facilement intégrable pour un faible coût final. Cette carte peut être embarquée avec l'objet qui doit être instrumenté, ce qui peut être important en termes de portabilité de l'application. En outre, chacune des voies est construite à l'aide de solutions électroniques spécifiques et optimisées pour obtenir le meilleur résultat final sur la grandeur à mesurer. Des composants hautement performant pourront être y être associés au cas par cas suivant les besoins.

Notons par ailleurs que la carte 31 peut embarquer ses propres alimentations linéaires à régulation séries parfaitement dédiées à la métrologie et qui peuvent présenter des masses analogiques découplées si les signaux à exploiter le nécessitent. Elle peut également embarquer les circuits de calibration pour la mesure et le contrôle dans le temps des gains des différents amplificateurs utilisés. Ainsi des procédures de calibration automatique associées, disponibles à tout moment pourront être utilisées. De plus, chacune des voies utilise un microcontrôleur dédié dans lequel sera programmé le code logiciel (compilé en assembleur) autonome spécifique à son application. La liaison avec un ordinateur extérieur est réduite à une seule interface série de type RS232, RS422, RS485, USB ou Ethernet, par l'intermédiaire d'un microcontrôleur maitre. Ce même microcontrôleur maitre pourra d'ailleurs être interfacé avec divers périphériques extérieurs, comme des afficheurs alphanumériques sans qu'il soit nécessaire d'utiliser un ordinateur pour la lecture des résultats.

**Revendications**

1. Dispositif de calibrage d'un calorimètre laser auto-étalonnable (2) par substitution électrique comportant

   - des moyens (2, 4, 6, 8, 10, 12, 14, 16, 18, 20, 22, 24, 26) pour mesurer une pluralité de grandeurs physiques de différentes natures et de différents niveaux,
   une unique carte d'acquisition (31) comportant, pour chaque grandeur à mesurer, une chaîne d'acquisition autonome (32, 34, 36, 38, 40) comprenant des circuits de traitement spécifiques à la grandeur mesurée, chaque chaîne d'acquisition autonome comportant un microcontrôleur (55) dédié au traitement de la grandeur à mesurer un élément chauffant (4),
   une source de tension à régulation série (8) destinée à fournir une puissance électrique à l'élément chauffant (4),
   une source d'eau de refroidissement,
   les moyens (2, 4, 6, 8, 10, 12, 14, 16, 18, 20, 22, 24, 26) pour mesurer une pluralité de grandeurs physiques de différentes natures et de différents niveaux comportant :

      au moins un voltmètre destiné à mesurer la tension aux bornes de ladite source de tension,
      au moins un thermomètre destiné à mesurer la température de l'eau de refroidissement respectivement à l'entrée et à la sortie dudit calorimètre(12), ledit thermomètre comportant au moins deux résistances agencées respectivement à l'entrée et à la sortie dudit calorimètre à travers un pont de Wheatstone de manière à réaliser des mesures de température, et
un fréquencemètre destiné à mesurer le débit d'eau de refroidissement.

**2.** Dispositif selon la revendication 1 dans lequel les microcontrôleurs (32, 34, 36, 38, 40) des différentes chaîne d'acquisition autonomes sont reliés à un microcontrôleur maître (42) relié à une unité de traitement (30) via un bus de données série commun.

**3.** Procédé de calibrage d'un calorimètre laser (2) auto-étalonnable par substitution électrique comportant des moyens de mesures d'une pluralité de grandeurs physiques de différentes natures et de différents niveaux, dans lequel chaque grandeur physique est mesurée et traitée dans une chaîne d'acquisition autonome (32, 34, 36, 38, 40) comportant des circuits de traitement spécifiques à la grandeur mesurée procédé dans lequel:

- on simule la puissance d'un faisceau laser à mesurer au moyen dudit calorimètre (2) en dissipant par effet joule une puissance électrique correspondant à ladite puissance laser sur un élément chauffant (4) bobiné autour d'un absorbateur du calorimètre (2) de façon à reproduire les effets thermiques résultant de l'absorption optique dudit faisceau laser, et,
- on mesure la différence de température entre la sortie et l'entrée d'eau du calorimètre à l'aide de deux sondes à résistance de platine placées respectivement à l'entrée et à la sortie du calorimètre à travers un pont de Wheatstone de manière à réaliser des mesures de température rapides à résolutions élevées et à faible bruit,
- on mesure la puissance électrique dissipée dans l'élément chauffant (4) en fonction de la variation de la température d'une quantité donnée d'eau de refroidissement entre l'entrée (14) et la sortie (18) du calorimètre,
- on traite chaque grandeur physique mesurée dans une chaîne d'acquisition autonome (32, 34, 36, 38, 40) au moyen de circuits de traitement spécifiquement dédiés à la grandeur mesurée et d'un microcontrôleur (55) dédié au traitement de la grandeur à mesurer.

**Patentansprüche**

**1.** Kalibriervorrichtung für ein Laserkalorimeter (2), das durch elektrische Substitution selbstkalibrierend ist, enthaltend Mittel (2, 4, 6, 8, 10, 12, 14, 16, 18, 20, 22, 24, 26) zum Messen einer Vielzahl von physikalischen Größen verschiedener Arten und Größenordnungen,
eine einzelne Erfassungskarte (31), die für jede zu messende Größe eine eigenständige Erfassungskette (32, 34, 36, 38, 40) umfasst, die für die zu messende Größe spezifische Verarbeitungsschaltungen enthält, wobei jede eigenständige Erfassungskette einen Mikrocontroller (55) aufweist, der der Verarbeitung der zu messenden Größe zugeordnet ist,
ein Heizelement (4),
eine seriell geregelte Spannungsquelle (8), die dazu bestimmt ist, dem Heizelement (4) elektrische Energie zuzuführen,
eine Kühlwasserquelle,
wobei die Mittel (2, 4, 6, 8, 10, 12, 14, 16, 18, 20, 22, 24, 26) zum Messen einer Vielzahl von physikalischen Größen verschiedener Arten und Größenordnungen enthalten:

zumindest ein Voltmeter, das dazu bestimmt ist, die Spannung an den Anschlüssen der Spannungsquelle zu messen,
zumindest ein Thermometer, das dazu bestimmt ist, die Temperatur des Kühlwassers am Einlass bzw. Auslass des Kalorimeters (12) zu messen, wobei das Thermometer zumindest zwei Widerstände umfasst, die jeweils am Einlass bzw. Auslass des Kalorimeters über eine Wheatstone-Brücke angeordnet sind, um Temperaturmessungen durchzuführen, und
einen Frequenzmesser, der dazu bestimmt ist, den Kühlwasserdurchsatz zu messen.

**2.** Vorrichtung nach Anspruch 1, wobei die Mikrocontroller (32, 34, 36, 38, 40) der verschiedenen eigenständigen Erfassungsketten mit einem Master-Mikrocontroller (42) verbunden sind, der über einen gemeinsamen seriellen Datenbus mit einer Verarbeitungseinheit (30) verbunden ist.

**3.** Verfahren zum Kalibrieren eines Laserkalorimeters (2), das durch elektrische Substitution selbstkalibrierend ist, enthaltend Mittel zum Messen einer Vielzahl von physikalischen Größen verschiedener Arten und Größenordnungen,

wobei

jede physikalische Größe gemessen und in einer eigenständigen Erfassungskette (32, 34, 36, 38, 40) verarbeitet wird, die für die zu messende Größe spezifische Verarbeitungsschaltungen enthält,

bei welchem Verfahren

- die Leistung eines Laserstrahls, die mit Hilfe des Kalorimeters (2) gemessen werden soll, simuliert wird, indem durch Joule-Effekt eine der Laserleistung entsprechende elektrische Leistung an ein Heizelement (4), das um einen Absorber des Kalorimeters (2) gewickelt ist, abgeführt wird, um die thermischen Effekte zu reproduzieren, die sich aus der optischen Absorption des Laserstrahls ergeben, und

- die Temperaturdifferenz zwischen Wasserauslass und -einlass des Kalorimeters mit Hilfe von zwei Platin-Widerstandsthermometern gemessen wird, die jeweils am Einlass und am Auslass des Kalorimeters über eine Wheatstone-Brücke angeordnet sind, um schnelle Temperaturmessungen mit hohen Auflösungen und geringem Rauschen durchzuführen,

- die in das Heizelement (4) abgeführte elektrische Leistung in Abhängigkeit von der Temperaturschwankung einer gegebenen Kühlwassermenge zwischen dem Einlass (14) und dem Auslass (18) des Kalorimeters gemessen wird,

- jede gemessene physikalische Größe in einer eigenständigen Erfassungskette (32, 34, 36, 38, 40) mittels Verarbeitungsschaltungen, die spezifisch der gemessenen Größe zugeordnet sind, und mittels eines Mikrocontrollers (55) verarbeitet wird, der der Verarbeitung der zu messenden Größe zugeordnet ist.

## Claims

1. Device for calibrating a Self-calibrating laser calorimeter (2) using electrical substitution comprising

- means (2, 4, 6, 8, 10, 12, 14, 16, 18, 20, 22, 24, 26) for measuring a plurality of physical values of different types and of different levels,

- a single acquisition card (31) comprising, for each value to be measured, an independent acquisition system (32, 34, 36, 38, 40) comprising processing circuits specific to the value measured, with each independent acquisition system comprising a microcontroller (55) dedicated to processing the value to be measured,

- a heating element (4),

- a source of series regulated voltage (8) intended to provide electrical power to the heating element (4),

- a source of cooling water,

- the means (2, 4, 6, 8, 10, 12, 14, 16, 18, 20, 22, 24, 26) for measuring a plurality of physical values of different types and of different levels comprising:

- at least one voltmeter intended to measure the voltage at the terminals of said voltage (8) source,

- at least one thermometer intended to measure the temperature of the cooling water respectively at the inlet and at the outlet of said calorimeter (12), said thermometer comprising at least two resistors placed respectively at the inlet and at the outlet of said calorimeter through a Wheatstone bridge in order to measure temperature, and a frequency meter intended to measure the flow of cooling water.

2. Device according to claim 1 wherein the microcontrollers (32, 34, 36, 38, 40) of the different independent acquisition systems are connected via a common serial data bus to a master microcontroller (42) connected to a processing unit (30).

3. Method for calibrating a self-calibrating laser calorimeter (2) using electrical substitution comprising means for measuring a plurality of physical values of different types and of different levels, wherein, each physical value is measured and processed in an independent acquisition system (32, 34, 36, 38, 40) comprising processing circuits specific to the value measured, the method comprising:

- simulating the power of a laser beam to be measured by means of said calorimeter (2) by dissipating by the Joule effect an electrical power corresponding to said laser power on a heating element (4) wound around an absorber of the calorimeter (2) in such a way as to reproduce the thermal effects resulting from the optical absorption of said laser beam, and,

- measuring the difference in temperature between the outlet and the inlet of the calorimeter using two platinum resistance thermometers placed respectively at the inlet and at the outlet of the calorimeter through a Wheatstone bridge in order to realize rapid temperature measurements with high resolutions and with low noise,

- measuring the electrical power dissipated in the heating element (4) according to the variation of the temperature of a given quantity of cooling water between the inlet (14) and the outlet (18) of the calorimeter,
- processing each physical value measured in an independent acquisition system (32, 34, 36, 38, 40) by means of processing circuits specifically dedicated to the value measured and d'un microcontroller (55) dedicated to processing the value to be measured.

**FIG. 1**

FIG. 2

FIG. 3

FIG. 4

EP 2 877 824 B1

**FIG. 5**

FIG. 6

FILTRE DE BESSEL PASSE HAUT ORDRE 4
FREQUENCE DE COUPURE 60Hz

FILTRE DE BESSEL PASSE BAS ORDRE 4
FREQUENCE DE COUPURE 400Hz

SUIVEUR

COMPARATEUR
Seuil 105mV = (R61/(R61+R62))*(+12V)
(CONSOMMATION 1mA)

SIGNAL TURBINE
MIS AU FORMAT
TTL 0/+5V POUR
MICROCONTROLEUR HCS12

EP 2 877 824 B1

EP 2 877 824 B1

ALIM. MICRO DEBIT
+5V/1A Max

**FIG. 7a**

ALIM. 3 MICRO SONDES
+5V/1A Max

**FIG. 7b**

ALIM. 3 MICRO SONDES
+15V/420mA Max

**FIG. 7c**

ALIM. 3 MICRO SONDES
-15V/420mA Max

**FIG. 7d**

**FIG. 7**

**EP 2 877 824 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SOCIA M.** Calorimètrie laser : mesure de forte puissances laser. *Bulletin du BNM,* 9-15